# EUROPÄISCHE PATENTSCHRIFT

(11) **EP 3 140 257 B1**
(45) Veröffentlichungstag und Bekanntmachung des Hinweises auf die Patenterteilung: **17.02.2021**
(21) Anmeldenummer: 15722967.5
(22) Anmeldetag: 30.04.2015
(51) Int. Cl.: C02F 3/10, C02F 3/34, C02F 3/30

(54) **VERFAHREN UND ANLAGE ZUR BIOLOGISCHEN ABWASSERREINIGUNG**
METHOD AND PLANT FOR BIOLOGICAL WASTEWATER TREATMENT
PROCÉDÉ ET INSTALLATION POUR L'ÉPURATION BIOLOGIQUE DES EAUX USÉES

(30) Priorität: 07.05.2014 DE 102014106371; 04.06.2014 DE 102014107905
(43) Veröffentlichungstag der Anmeldung: 15.03.2017
(73) Patentinhaber: WTE Wassertechnik GmbH, 45136 Essen (DE)
(72) Erfinder: Sekoulov, Ivan, 22607 Hamburg (DE); Dohmann, Max, 52134 Herzogenrath (DE)
(74) Vertreter: Raffay & Fleck
(86) Internationale Anmeldenummer: PCT/EP2015/059590
(87) Internationale Veröffentlichungsnummer: WO 2015/169702

(56) Entgegenhaltungen:
- EP-A2- 2 230 212
- DE-A1- 3 441 664
- DE-A1- 3 503 723
- DE-C1- 4 332 762
- FR-A1- 2 741 872
- US-A- 5 702 604

## Beschreibung

### Technisches Gebiet

Die Erfindung betrifft einmal ein Verfahren und eine Anlage zur biologischen Abwasserreinigung mit einem Abbau organischer Fracht, dem sog. BSB-Abbau, und der Oxidation der Stickstofffracht, der Nitrifikation, sowie eine Ergänzung dieses Verfahrens und der entsprechenden Anlage um eine vorgeschaltete Denitrifikation zur Elimination von im Abwasser enthaltenen Stickstoffverbindungen zu Stickstoffgas. Die erfindungsgemäßen Verfahrensansätze und Anlagen beruhen auf der Verwendung von weitgehend sessilen Mikroorganismen, sog. Heterotrophen, für den BSB-Abbau, von Mikroorganismen, sog. Denitrifikanten, für die Denitrifikation und von Mikroorganismen, sog. Nitrifikanten, für die Nitrifikation.

### Stand der Technik

Insbesondere erfolgen die Denitrifikation und Nitrifikation sowie der Abbau der organischen Verschmutzung (bestimmt über den Abbau des biochemischen Sauerstoffbedarfs, BSB) in einem biologischen Abwasserreinigungssystem mit anoxischer/aerober Stufe und einer Nachklärung, wobei der neben der sessilen Biomasse suspendiert gewachsene Belebtschlamm teilweise zurückgeführt und teilweise als Überschussschlamm aus dem biologischen System entfernt wird.

Derartige Verfahren zur biologischen Abwasserreinigung mit weitgehendem BSB-Abbau und Nitrifikation unter Verwendung sessiler Mikroorganismen sind grundsätzlich bekannt. Bei den bekannten Verfahren wird in der aeroben Stufe mit einer gemeinsamen Biomasse gearbeitet, in der insbesondere Heterotrophe und Nitrifikanten, die beide für die Umsetzung der spezifischen Last aus dem Abwasser Sauerstoff benötigen, gemeinsam auf Trägerkörpern angesiedelt sind. Bei diesen bekannten Verfahren für den weitgehenden BSB-Abbau und die Nitrifikation muss ein Wachstum der Nitrifikanten gewährleistet werden. Da die Wachstumsrate der BSB-abbauenden heterotrophen Mikroorganismen etwa dem 4 bis 6 Fachen der Wachstumsrate der Nitrifikanten entspricht muss das Verhältnis "Nahrung : Mikroorganismen" [BSB:TS = B0 (mg BSB5/kg TS*.d); BSB5: biochemischer Sauerstoffbedarf in fünf Tagen, TS: Trockensubstanz, d: Tag], nämlich die BSB5-Belastung zur Gewährleistung der Nitrifikation wesentlich, z.B. auf B0 = 0,1 - 0,05 (kgBSB5/kgTS*.d), herabgesetzt werden Das notwendige Nitrifikantenwachstum ist deshalb bei Systemen mit gemeinsamer Biomasse nur durch derartig niedrige Schlammbelastungen d. h. durch entsprechend große Reaktorvolumina zu erreichen.

Bei der Stoffwechselreaktion der Heterotrophen entsteht Biomasse, ein Konsortium von Mikroorganismen (Überschussschlamm), wobei der BSB als Kohlenstoff- und Energiequelle dient. Die Nitrifikanten wachsen mit CO ₂ als Kohlenstoffquelle und NH₄ als Energiequelle und haben bei der gemeinsamen Biomasse einen Anteil von bis zu ca. 3%.

Aus der DE 34 41 664 A1 ist ein Verfahren und ist eine Vorrichtung zur biologischen Reinigung von Abwasser bekannt. In einem kaskadenartig von dem Abwasser durchströmten Reaktorsystem sind Trägerkörper aus Schaumstoff unterschiedlicher Porosität und mit unterschiedlichen Volumen angeordnet. Diese bieten den jeweils in Abschnitten anzusiedelnden Mikroorganismen Aufwuchsfläche. In der DE 43 32 762 C1 ist ein Verfahren und ist eine Vorrichtung zur biologischen Behandlung von organisch belastetem Abwasser beschrieben. Hier wird ein vertikal in einzelne Kompartimente unterteilter und abwärts durchströmter Reaktionsraum verwendet, um BSB-Abbau und Nitrifikation zu erreichen. Als Aufwuchsmaterialien für die Mikroorganismen werden Aktivkohlepartikel, bzw. Polyethlyen-Sintermaterialien vorgeschlagen. Darstellung der Erfindung

Der Erfindung liegt daher die Aufgabe zugrunde, durch ein weitgehend örtlich getrenntes Wachstum von Heterotrophen und Nitrifikanten im aeroben Teil der Anlage (ein aerober Reaktor bzw. zwei hintereinander geschaltete aerobe Reaktoren) gegenüber einer gemischten Biomasse eine wesentliche Verringerung des Reaktorvolumens und eine Reduzierung des Energieverbrauchs zu erreichen.

Erfindungsgemäß gelingt dies durch die Trennung der Nitrifikantenbiofilme von den Heterotrophenbiofilmen auf unterschiedlichen Trägermaterialien bzw. Trägerkörpern. Als Selektion wird dabei die unterschiedliche Art des Wachstums der Mikroorganismen genutzt, durch entsprechend auf die jeweils gegebenen Bedürfnisse der Mikroorganismen angepasste Oberflächen der Trägerkörper.

So sieht die Erfindung in einer Ausgestaltung der aeroben Stufe vor, dass zwei unterschiedliche Trägermaterialien (zwei Arten von Trägerkörpern aus unterschiedlichem Material und unterschiedlicher Materialdichte), eines für Nitrifikantenbiofilme und ein zweites für Heterotrophenbiofilme, gemeinsam in einem Reaktor integriert vorliegen. Neben der auf den Trägerkörpern angesiedelten sessilen Biomasse wird in dem System unvermeidbar auch ein geringer Anteil suspendiert gewachsener Biomasse entstehen.

Nitrifikanten haften typischerweise gut auf glatten Oberflächen und bilden dünne Biofilme (mit Dicken von 10 µm bis 40 µm). Die Heterotrophen bilden hingegen dicke Biofilme (mit Dicken von 0,25 mm bis 0,50 mm). Derart dicke Biofilme benötigen dabei raue und geformte Materialien, die einen Schutz gegen die Auswaschung durch die Wasserströmung bieten.

Insoweit werden im Rahmen der Erfindung im aeroben Anlagenteil Trägerkörper aus Materialien mit glatter Oberfläche als Nitrifikanten-Trägerkörper und raue Trägerkörper als Heterotrophen-Trägerkörper verwendet. Als geeignete Nitrifikanten-Trägerkörper haben sich kugelförmige Ton- oder Keramikteilchen erwiesen, mit einer Dichte von 1,0 bis 1,2 kg/dm³. Hier können z.B. von der Liapor GmbH & Co. KG, Deutschland, unter der Markenbezeichnung Liapor® angebotene Tonkugeln verwendet werden. Als Heterotrophen-Trägerkörpe werden Ton- oder Keramikkugeln mit geringerer Dichte verwendet, z.B. Tonkugeln der Marke Liapor® des oben genannten Anbieters, mit einer geringen Dichte von 0,8 bis 0,9 kg/dm³.

Die Schichtdicke der Nitrifikanten-Biofilme auf den Trägerkörpern war bei durchgeführten Versuchen gering und die Oberfläche weitgehend frei von fremdem Bewuchs. Zudem wird durch die günstige Grenzschichterneuerung die Diffusionsgeschwindigkeit gegenüber dickeren Schichten wesentlich erhöht. Eine Konzentration des gelösten Sauerstoffs O₂ von mehr als 3 bis 5 mg/l wird dafür nur in Sonderfällen nötig sein. Typischerweise wird die gelöste Sauerstoffkonzentration in Abhängigkeit von der notwendigen Diffusion im Biofilm und von der Wassertemperatur sowie von den einzuhaltenden NH₄ - N - Ablaufwerten geregelt und üblicherweise zwischen 1,5 und 5 mg/l eingestellt werden.

Begründet darin, dass bei dem erfindungsgemäßen Prozess das Biowachstum vorwiegend auf den Trägermaterialien stattfindet, kommt es gegenüber suspendierten Biomassen zu einer Entlastung der Nachklärung und einer deutlichen Reduzierung ihres Volumens und Platzbedarfs. Ein Verzicht auf konventionelle Nachklärbecken lässt sich in bestimmten Fällen durch den Einsatz von kostengünstigeren Siebanlagen ermöglichen. Bei höheren Anforderungen an die Konzentration abfiltrierbarer Stoffe im Kläranlagenablauf kann ergänzend eine Sand- oder Membranfiltration erfolgen.

Der größte Teil der eine Nitrifikation bewirkenden Biomasse verlässt bei richtiger Bemessung und Gestaltung der Anlage nicht den nitrifizierenden Anlagenteil, was sich günstig auf die Nitrifikationsprozesse auswirkt.

Zur Verhinderung des Eintrags von Schlamm aus einem vorgelagerten Denitrifikationsreaktor in den nitrifizierenden Anlagenteil bedarf es einer besonderen Ausgestaltung des Denitrifikationsreaktors. Bevorzugt wird dieser anoxische Anlagenteil mit einer Beschickung von unten und mit kugelförmigen Trägerkörpern ausgebildet, die neben der von ihnen gebotenen Aufwuchsfläche für denitrifizierende Mikroorganismen vor allem für eine stabile Durchströmung und das Entgasen des Reaktors ohne massiven Schlammauftrieb sorgen. Ein Verklumpen von Biomasse und Trägermaterial wird durch ein temporär betriebenes Rührwerk mit paddelartigen Rührstäben verhindert. Versuche mit einem solchen Reaktor zeigten eine gute Schlamm-Wasser-Separation mit nur sehr geringem Feststoffabtrieb in den nachfolgenden Anlagenteil.

Bei dem erfindungsgemäßen Anlagenteil zur Nitrifikation erfolgt die Bemessung des Nitrifikationsvolumens insbesondere nicht mehr allein nach dem Belebtschlammalter bzw. der BSB5-Belastung (in kg BSB5/kg TS*.d), sondern vielmehr wesentlich auch nach der Wassertemperatur, nach dem Sauerstoffpotential, nach dem pH-Wert sowie nach der entsprechenden spezifischen Nitrifikationsrate (in mg (NH₄ -N/m²*h) und der Verweilzeit.

Die große Abhängigkeit der Nitrifikationsrate von der gelösten Belüftungssysteme bei Bedarf z.B. erhöht oder verringert werden, was eine hohe Energieeffizienz beim Sauerstoffeintrag ermöglicht. Zur Steuerung der Nitrifikationsprozesse ist lediglich eine übliche Online-Messsonde für den Sauerstoff O₂ notwendig. Eine Ammoniumelektrode zum Messen der Konzentration von NH₄ kann dabei zusätzlich von Vorteil sein.

Mit der Erfindung wird die nachhaltige Entwicklung zu einer Anlage mit Kohlenstoff- und Stickstoffelimination erreicht. Dies geschieht auf einfache Weise, indem zwei hintereinander geschaltete getrennte Reaktoren, ein anoxischer Reaktor für die Denitrifikation, insbesondere mit Trägermaterial, und ein aerober Reaktor mit zwei unterschiedlichen Trägermaterialien für die Nitrifikation und den Kohlenstoffabbau (BSB-Abbau) verwendet werden.

Die Prozessführung unterscheidet sich von konventionellen Kaskadebauartsystemen gerade durch den Einsatz von differenzierten Biofilmträgern (Trägerkörpern unterschiedlichen Trägermaterials). Der Erfindung gemäß ist die Biomasse, bestehend aus drei unterschiedlichen Gruppen von Mikroorganismen: den Heterotrophen (BSB-Abbauende), den Nitrifikanten (Nitrat- und Nitritoxydanten) sowie den Denitrifikanten (für die Reduktion des Nitrats zu N₂), getrennt in drei biologischen Anlagenteilen enthalten, wobei diese Aufteilung für die aeroben Mikroorganismen in einem gemeinsamen Reaktor, durch stratifizierte vertikale Schichtung erfolgt. Dabei wird durch unterschiedliche Dichten der für die jeweiligen Mikroorganismen spezifisch und also unterschiedlich ausgebildeter Trägerkörper für das Aufwachsen der Nitrifikanten bzw. für das Aufwachsen der Heterotrophen für den BSB-Abbau eine Schichtung erreicht, aber auch durch mechanischen Rückhalt wenigstens einer Sorte von Trägerkörpern in einem Vertikalbereich des Reaktors, z.B. mit Hilfe von Käfigen oder dergleichen. Bei der erfindungsgemäß vorgesehenen vertikalen Stratifizierung sind die für den Aufwuchs von Nitrifikanten spezifisch gebildeten Trägerkörper so gestaltet, dass sie sich in einer vertikal unteren Schicht des Reaktors anordnen oder dort mechanisch zurückgehalten werden. Die für den Aufwuchs von Heterotrophen für den BSB-Abbau spezifisch gebildeten Trägerkörper sind dann für eine entsprechend in einer vertikal höheren Lage des Reaktors gelegene Anordnung ausgeprägt. Erfindungsgemäß wird in den die Nitrifikanten und die Heterotrophen enthaltenden Reaktor vom Boden her Sauerstoff oder ein Sauerstoff enthaltendes Gasgemisch (z.B. Luft) eingeblasen. So steht den Nitrifikanten, die einen hohen Sauerstoffbedarf haben, Sauerstoff in einer hohen Konzentration zur Verfügung, während die Heterotrophen für den BSB-Abbau mit entsprechend durch den Verbrauch durch die Nitrifikanten reduziertem Sauerstoffgehalt versorgt werden, so dass diese Mikroorganismen nicht in einem solchen Maße sich vermehren, dass sie die Nitrifikanten auf den für letztere spezifisch ausgebildeten Trägerkörpern etwa verdrängen könnten.

Gemäß der vorliegenden Erfindung ist es wesentlich, die Bildung von Biofilmen auf getrennten Trägermaterialien vorzusehen. Die Anpassung an die Oberflächenbedingungen dieser Materialien nach deren Anhaftungseigenschaften ist für die optimale Trennung der Mikroorganismen in Nitrifikanten und Heterotrophe von besonderer Bedeutung. Die erfindungsgemäßen biologischen Prozesse für eine weitergehende Abwasserreinigung mit Elimination der organischen Last (Kohlenstoffelimination) und der Stickstofffracht (Stickstoffelimination) beruhen deshalb auf getrennten heterotrophen und autotrophen sessilen Mikroorganismen. Auf einen möglicherweise bei suspendierten Biomassen notwendigen Selektor kann dabei verzichtet werden, da der Belebtschlamm auf Trägermaterialien aufwächst und eine Blähschlammbildung nicht bekannt ist.

Das nitrifizierte Abwasser wird zur Denitrifikation in den vorgelagerten Denitrifikationsreaktor rezirkuliert und zwar mit einer Rezirkulationsrate, bestimmt nach dem Verhältnis der Menge des rezirkulierten Abwassers QR zur Menge des zulaufenden Abwassers QZ von z. B. QR = ca. 2*QZ. Die Denitrifikationsgeschwindigkeit kann dabei insbesondere im Labor mit aerober Respirationsmessung eines Biomassegemisches aus dem Denitrifikationsreaktor berechnet werden. Durch Labormessungen der Atmungsaktivität werden dabei Erfahrungswerte bestimmt, die als Stütze für den Denitrifikationsbetrieb dienen.

Bevorzugt können die Trägerkörper mit den Nitrifikanten, können aber auch andere Trägerkörper mit anderen Mikroorganismen, in käfigartigen Einfassungen, z.B. Drahtkästen, z. B. solche mit Abmessungen nach Höhe (H), Breite (B) und Länge (L) von H x B x L = 1,0 m x 1,5 m x 1,5 m, angeordnet werden, um eine Vermischung mit anderen Trägerkörpern im gleichen Reaktor zu verhindern und die Trägerkörper mit den Mikroorganismen z.B. für Wartungsarbeiten im betreffenden Reaktor einfach entnehmen zu können. Gerade für die Nitrifikanten ist diese Anordnung in einer käfigartigen Einfassung von Vorteil, wenn diese Einfassung über dem Belüftungssystem der aeroben Stufe angeordnet wird. Denn so ist mit der hohen Sauerstoffkonzentration im Bereich der Bodenbelüftung der hohe Sauerstoffbedarf der Nitrifikanten und damit eine hohe Nitrifikationsrate zu sichern.

Bevorzugt kann die Abtrennung der Trägermaterialien vom Reaktorablauf allein durch mit entsprechend geringem Einlassquerschnitt versehene, z.B. quer angesägte oder angeschnittene Überlaufrohre, die an der Oberfläche des Reaktors in Höhe des Wasserspiegels angeordnet sind, erfolgen. Durch die entsprechende Anordnung der Überlauf- bzw. Ablaufrohre wird die homogene Verteilung der Biofilmträger im Volumen der einzelnen Reaktoren gewährleistet. Hier wird also eine solche Ablaufeinrichtung an der Oberfläche der Reaktoren gebildet, um die Trägermaterialien mit den Biofilmen vor dem Ablauf des Abwassers gleichmäßig abzutrennen und nur die suspendiert gewachsene Biomasse in der Nachklärung abzuscheiden bzw. bedarfsweise in die Denitrifikationsstufe zurückzuführen. Die Biomasse wächst in dem erfindungsgemäßen aeroben Anlagenteil ohnedies vorwiegend auf den jeweils gewählten, für die spezifischen Mikroorganismen geeigneten Trägermaterialien, so dass nur ein kleiner Teil der Biomasse in suspendierter Form vorliegt. Diese kann, wenn nicht in den Denitrifikationsreaktor zurückgeführt, aus dem Nachklärbecken bzw. der Siebanlage als Überschussschlamm entfernt werden.

Die Erfindung zeichnet sich insbesondere auch dadurch aus, dass eine bestehende Kläranlage mit wenig Aufwand umgebaut werden kann, um eine jedenfalls weitgehende Stickstoffelimination und einen weitgehenden BSB-Abbau mit der Erfüllung von hohen Ansprüchen an "Abwassereinleitungen in sensiblen Gebieten" zu erzielen, was allein mit der Anwendung von geeigneten Trägermaterialien in den biologischen Reaktoren erreicht werden kann.

Verbunden mit der unterschiedlichen Ansiedlung der Biomasse und dem innovativen Klärsystem ergeben sich gegenüber konventionellen Systemen mit suspendierter Biomasse insbesondere folgende Vorteile:
- Reduzierung des Reaktorvolumens zur biologischen Abwasserreinigung durch den Einsatz von speziellen Trägerkörpern und deren Anordnung in den Reaktoren,
- Optimierung der Nitrifikationsrate nach Bedarf u. a. durch Einstellung von entsprechend hohen Sauerstoffkonzentrationen über die Belüfter. Dies erlaubt eine wesentliche Reduzierung der Belüftungsenergie,
- Bemessung unabhängig vom autotrophen Schlammalter aufgrund von Langzeit-Biofilmen auf Trägermaterialien,
- Vermeidung unerwünschter aerober Schlammstabilisierung als Folge der niedrigen BSB5-Belastung, die zum Erhalt der Nitrifikanten in der Biomasse notwendig wäre und gleichzeitig mit der dadurch möglichen Energieeinsparung eine energetisch verbesserte Nutzung des Schlammes bei Kläranlagen mit einer Schlammfaulung,
- Vermeidung von Blähschlamm,
- reduzierte Rücklaufschlammmengen aus der Nachklärung und damit vor allem verringerte Energiekosten durch den Einsatz von Trägermaterialien,
- geringeres Volumen und geringerer Platzbedarf für die Nachklärung als Sedimentationsbecken bzw. möglicher Ersatz der Sedimentation durch eine kostengünstigere Feinsiebung,
- temperaturausgleichende Wirkung von Biofilmträgern aus Ton bzw. Keramik bei Anlagen in Klimazonen mit hohen Tag-Nacht-Temperaturdifferenzen. Kurze Beschreibung der Zeichnungen

Weitere Vorteile und Merkmale der Erfindung sind aus der nachfolgenden Beschreibung der Figuren 1 bis 3 zu entnehmen, wobei die Figur 2 ein nicht erfindungsgemäßes Vergleichsbeispiel zeigt.
Fig. 1 schematischer Aufbau einer erfindungsgemäßen Anlage zur Nitrifikation und zum BSB-Abbau in einem Reaktor unter Verwendung zweier unterschiedlicher Trägermaterialien,
Fig. 2 schematischer Aufbau einer nicht erfindungsgemäßen Anlage zum BSB-Abbau und zur Nitrifikation in zwei hintereinander geschalteten Reaktoren mit jeweils einem spezifischen Trägermaterial,
Fig. 3a schematische Draufsicht auf einen erfindungsgemäßen Denitrifikationsreaktor entsprechend Fig. 3b,
Fig. 3b schematischer Querschnitt eines erfindungsgemäßen aufwärts betriebenen Denitrifikationsreaktors mit einem Trägermaterial. Weg(e) zur Ausführung der Erfindung

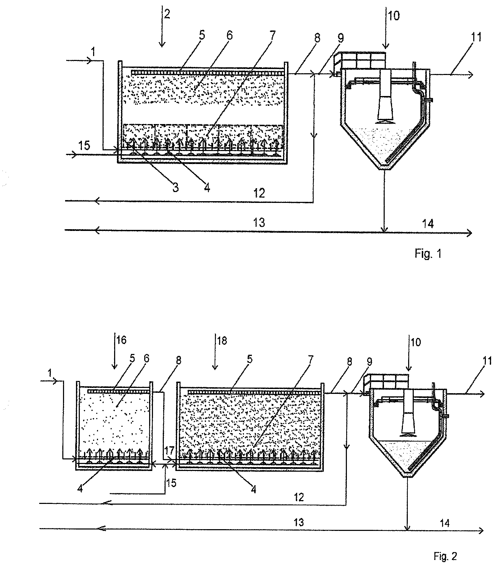

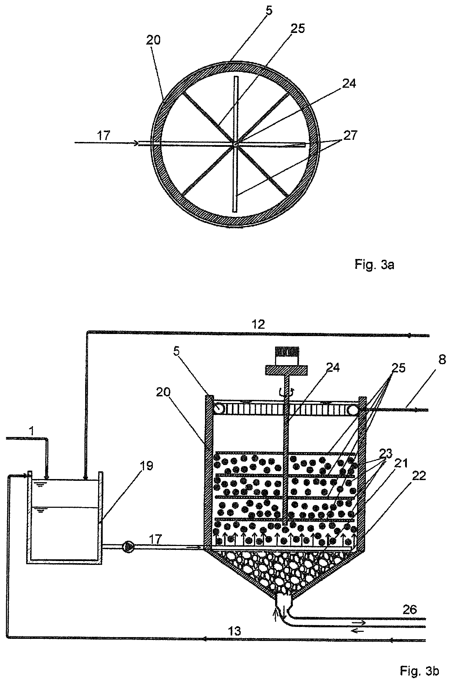

Die Figuren 1 und 3 sind schematische Darstellungen von Anordnungen zur Umsetzung der Erfindung. Diese Figuren und die nachstehenden Beschreibungen dienen allein der näheren Veranschaulichung der Erfindung und stellen nicht eine Beschränkung des allgemeinen Schutzumfangs gemäß den bestimmten Ansprüchen dar. In Figur 2 ist hingegen ein nicht erfindungsgemäßes Vergleichsbeispiel gezeigt.

Fig. 1 zeigt einen Reaktor mit Nachklärung zur Nitrifikation und zum BSB-Abbau von vorgereinigtem Abwasser. Ein Zulauf 1 führt mit Rechen, Sandfang und Feinsieb mechanisch vorbehandeltes und nach der beschriebenen mechanischen Vorbehandlung zusätzlich in einer Denitrifizierungsstufe behandeltes Abwasser. Über den Zulauf 1 gelangt das Abwasser in den Sohlbereich eines aeroben Reaktors 2 und wird dort mit Hilfe von Zulaufrohren und Zulaufdüsen über einen Reaktorboden 4 verteilt dem Reaktor 2 zugeführt. Das zugeführte Abwasser durchströmt zunächst den unteren Reaktorteil mit Trägerkörpern 7, die eine glatte Oberfläche aufweisen, auf denen vor allem nitrifizierende Mikroorganismen als Biofilm angesiedelt sind. Durch diese erfolgt die Nitrifikation, die Oxidation von Ammonium zu Nitrit und Nitrat. Eine Durchmischung der Trägerkörper 7 mit zeitlich nachfolgend durchströmten Trägerkörpern 6, die eine raue Oberfläche und eine geringere Dichte als die Trägerkörper 7 haben, wird durch Drahteinfassungen 3 verhindert. Die Trägerkörper 6 dienen dem Aufwuchs heterotropher Mikroorganismen zum BSB-Abbau.

Die Prozesse der Stickstoffoxidation und des BSB-Abbaus werden im Reaktor 2 durch eine Sauerstoffzufuhr 15 ermöglicht. Über die Reaktorhöhe ergibt sich durch den Sauerstoffbedarf der Mikroorganismen ein entsprechendes Konzentrationsgefälle, so dass die zunächst erreichten nitrifizierenden Mikroorganismen mit einer höheren Sauerstoffkonzentration versorgt werden, was ihrem gegenüber den heterotrophen Mikroorganismen wesentlich höherem Sauerstoffbedarf entgegenkommt.

Über geschlitzte Überlaufrohre 5, die ein Ausschwemmen von Trägerkörpern 6, 7 verhindern, fließt das Abwasser in einen Reaktorablauf 8 und weiter über einen Zulauf zur Nachklärung 9 in eine Nachklärung 10. Die Nachklärung 10 kann als Sedimentationsanlage oder möglicherweise auch als Siebanlage ausgeführt werden. Das gereinigte Abwasser verlässt die Nachklärung 10 über einen Ablauf der Nachklärung 11.

Bei einer notwendigen Stickstoffelimination wird Abwasser vom Reaktorablauf 8 aus über eine Rücklaufleitung 12 in einen dem Reaktor 2 vorgelagerten Reaktor, wie in Fig. 3 näher beschrieben, zurückgeführt. Die Höhe der Rückführrate ergibt sich durch den angestrebten Grad der Stickstoffelimination. Der in der Nachklärung abgesetzte bzw. konzentrierte Schlamm wird im Falle einer von der Anlage geforderten Stickstoffelimination über eine Schlammrückführleitung 13 in die vorgelagerte Denitrifikationsstufe (s. Fig. 3) zurückgeführt. Im Falle einer geforderten Stickstoffoxidation wird die Schlammrückführleitung 13 nicht benötigt. Der entstehende Überschussschlamm wird über eine Überschussschlammleitung 14 zur weiteren Schlammbehandlung geführt.

Fig. 2 zeigt eine gegenüber Fig. 1 andere Prozessführung und einen anderen Aufbau der Anlage zur Nitrifikation und zum BSB-Abbau von vorgereinigtem Abwasser. Die hier gezeigte Anordnung und das dargestellte Verfahren fallen nicht unter die hier offenbarte Erfindung. Über
einen Zulauf 1 wird das vorbehandelte Abwasser in den Sohlbereich eines Reaktors 16 für den BSB-Abbau geführt. Über Zulaufrohre und Zulaufdüsen erfolgt dann die Beschickung des Reaktors 16 über einen Reaktorboden 4 verteilt. Das Abwasser durchströmt aufwärts das Reaktorvolumen mit Trägerkörpern 6. Die Trägerkörper 6 dienen mit ihrer rauen Oberfläche dem Aufwuchs heterotropher Mikroorganismen zum BSB-Abbau. Neben den sessilen Mikroorganismen auf den Trägerkörpern 6 wird ein Teil der den BSB- Abbau erledigenden Mikroorganismen im Reaktor suspendiert vorliegen. Die Sauerstoffversorgung der aeroben Mikroorganismen erfolgt über eine Sauerstoffzufuhr 15.

Über geschlitzte Überlaufrohre 5 gelangt das Abwasser in einen Reaktorablauf 8 und weiter über einen Reaktorzulauf 17 in einen Nitrifikationsreaktor 18. Von dort erfolgt die Reaktorbeschickung wie beim vorgelagerten Reaktor 16 für den BSB-Abbau. Das Abwasser durchströmt aufwärts das Reaktorvolumen mit Trägerkörpern 7. Die Trägerkörper 7 haben eine glatte Oberfläche und dienen vor allem dem Aufwuchs von autotrophen Mikroorganismen, den Nitrifikanten, zur Oxidation des Ammoniums. Die Sauerstoffversorgung der Nitrifikanten erfolgt über die Sauerstoffzufuhr 15. Wie beim vorgelagerten Reaktor 16 gelangt das Abwasser über geschlitzte Überlaufrohre 5 zu einem Reaktorablauf 8 und weiter über einen Zulauf zur Nachklärung 9 in eine Nachklärung 10. Die Nachklärung 10 kann als Sedimentationsanlage oder möglicherweise auch als Siebanlage gebaut werden. Das gereinigte Abwasser fließt über einen Ablauf 11 der Nachklärung 10 ab.

Bei einer von der Anlage geforderten Sickstoffelimination wird Abwasser vom Reaktorablauf 8 des Nitrifikationsreaktors 18 über eine Rücklaufleitung 12 in einen dem Reaktor 16 vorgelagerten Reaktor, wie in Fig. 3 näher beschrieben, zurückgeführt. Die Rückführmenge ist von dem angestrebten Grad der Stickstoffelimination abhängig.

Der in der Nachklärung abgesetzte bzw. konzentrierte Schlamm wird im Falle einer geforderten Stickstoffelimination über eine Schlammrückführleitung 13 in die vorgelagerte Denitrifikationsstufe (s. Fig. 3) zurückgeführt. Bei einer Beschränkung der Anlagenleistung auf eine Stickstoffoxidation wird die Rückführleitung 13 nicht benötigt. Der entstehende Überschussschlamm gelangt über eine Überschussschlammleitung 14 zur weiteren Schlammbehandlung.

Fig. 3 zeigt einen Reaktor 20 zur Denitrifikation von mechanisch vorgereinigtem Abwasser. In Fig. 3a ist die Draufsicht und in Fig. 3b ein Vertikalschnitt des Reaktors 20 dargestellt. In einem Ausgleichsbehälter und Pumpensumpf 19 werden mechanisch vorbehandeltes Abwasser über einen Zulauf 1, nitrifiziertes Rücklaufwasser über eine Rücklaufwasserleitung 12 und Schlamm aus einer Nachklärung über eine Schlammrückführleitung 13 zusammengeführt. Eine Pumpe sorgt für die Beschickung des im Querschnitt runden Denitrifikationsreaktors 20 über einen Reaktorzulauf 17. Gelochte Zulaufrohre 27 sorgen für eine Verteilung des zulaufenden Abwassers über den Reaktorquerschnitt. Die vertikale Strömungsumkehrung im Reaktor 20 wird durch in dem Reaktor 20 befindliche kugelförmige Trägerkörper 23 begünstigt, indem diese Trägerkörper 23 eine stabilisierende Wirkung auf die Strömung ausüben. Diese Trägerkörper 23 haben einmal die Aufgabe Aufwuchsflächen für heterotrophe Mikroorganismen zur beabsichtigten Denitrifikation zu bieten und außerdem eine massive Schlammbettbildung im unteren Teil des Reaktors 20 zu verhindern. Mit Hilfe eines vertikalen Rührwerks 24 mit horizontalen Rührstäben 25 wird ebenfalls einer massiven Schlammbettbildung vorgebeugt. Darüber hinaus gewährleisten die Rühreinrichtungen eine gute Ausgasung des elementaren Stickstoffs ohne ein massives Auftreiben von Schlamm.

Das Austragen von Schlamm aus dem Reaktor 20 erfolgt aus einem Trichter des Reaktors 20 über eine Drainageschicht 21 aus steinigem Material und einen Schlammablauf 26. Einen Schutz vor dem Eindringen von Trägerkörpern 23 in die Drainageschicht 21 bietet entweder ein entsprechend durchlässiger Drahtboden des Reaktors 20 oder eine körnige Feindrainage 22. Im Falle einer Verstopfung der Drainageschicht durch Schlamm wird die Schlammablaufleitung 26 zur Rückspülung mit Abwasser des Zulaufs 1 genutzt.

Über dem unteren Reaktorvolumen mit Trägerkörpern 23 und Schlamm bildet sich eine suspensarme Abwasserschicht, aus der reaktoroberflächennah ein ringförmiges, geschlitztes Überlaufrohr 5 das Abwasser in einen Reaktorablauf 8 abführt. Der Reaktorablauf 8 entspricht dem Zulauf 1 in den Fig. 1 und 2.

### Bezugszeichenliste

- 1: Zulauf
- 2: aerober Reaktor
- 3: Drahtkäfige für autotrophe Biofilmträger
- 4: Durchlässiger Reaktorboden
- 5: Überlaufrohr
- 6: Trägerkörper mit heterotrophen Organismen
- 7: Trägerkörper mit Nitrifikanten
- 8: Reaktorablauf
- 9: Zulauf zur Nachklärung
- 10: Nachklärung
- 11: Ablauf der Nachklärung
- 12: Rücklaufleitung
- 13: Schlammrückführleitung
- 14: Überschussschlammleitung
- 15: Sauerstoffzufuhr
- 16: Reaktor für BSB-Abbau
- 17: Reaktorzulauf
- 18: Nitrifikationsreaktor
- 19: Ausgleichsbehälter und Pumpensumpf
- 20: Denitrifikationsreaktor
- 21: Drainage für Schlamm
- 22: gelochter Drahtboden bzw. feinkörnige Drainage
- 23: Trägerkörper für Denitrifikanten
- 24: Rührwerk
- 25: Rührstäbe
- 26: Schlammablauf bzw. Spülleitung
- 27: gelochte Zulaufrohre

## Patentansprüche

1. Verfahren zur biologischen Abwasserreinigung mit Denitrifikation und nachgeschalteter Nitrifikation zur Elimination von in dem Abwasser enthaltenen Stickstoffverbindungen zu Stickstoffgas und mit einem Abbau organischer Fracht, dem sog. BSB-Abbau, unter Verwendung von heterotrophen Mikroorganismen, den sog. Denitrifikanten, für die Denitrifikation, von autotrophen Mikroorganismen, sog. Nitrifikanten, für die Nitrifikation, und von aeroben heterotrophen Mikroorganismen für den BSB-Abbau, wobei das Abwasser mit den Denitrifikanten, den Nitrifikanten und den aeroben Heterotrophen für den BSB-Abbau in definierter Reihenfolge und räumlicher Trennung in Kontakt gebracht wird, **dadurch gekennzeichnet, dass** die Nitrifikanten und die aeroben Heterotrophen auf unterschiedlichen, mit auf die jeweils gegebenen Bedürfnisse der Nitrifikanten und der aeroben Heterotrophen angepassten Oberflächen ausgebildeten und voneinander räumlich getrennten Trägerkörpern aufwachsen, wobei die Trägerkörper für die Nitrifikanten kugelförmige Ton- oder Keramikteilchen mit einer Dichte von 1,0 bis 1,2 kg/dm³ sind, die Trägerkörper für die aeroben Heterotrophen kugelförmige Ton- oder Keramikteilchen mit einer Dichte von 0,8 bis 0,9 kg/dm³, und dass die Mikroorganismen zur Nitrifikation und zum BSB-Abbau in einem aufwärts durchströmten Reaktor, in den vom Boden her Sauerstoff oder ein Sauerstoff enthaltendes Gasgemisch eingeblasen wird, über die Höhe stratifiziert derart aufgeteilt sind, dass die auf den kugelförmigen Ton- oder Keramikteilchen mit einer Dichte von 1,0 bis 1,2 kg/dm³ aufgewachsenen Nitrifikanten in einer vertikal unteren Schicht des Reaktors angeordnet sind und die auf den kugelförmigen Ton- oder Keramikteilchen mit einer Dichte von 0,8 bis 0,9 kg/dm³ aufgewachsenen aeroben Heterotrophen in einer vertikal höheren Lage des Reaktors angeordnet sind.

2. Verfahren nach einem der Anspruch 1, **dadurch gekennzeichnet, dass** ein getrennt vorgeschalteter Reaktor zur Denitrifikation vorgesehen wird.

3. Verfahren nach Anspruch 2, **dadurch gekennzeichnet, dass** der Reaktor zur Denitrifikation einen runden Querschnitt aufweist, aufwärts durchströmt wird und darin angeordnete Trägerkörper aufweist, die Aufwuchsflächen für Denitrifikanten bieten und eine stabile Durchströmung des Reaktors einschließlich einer guten Schlamm-Wasser-Trennung gewährleisten, und dass der Reaktor zur Denitrifikation ein zumindest temporär betreibbares Rührwerk mit paddelartigen Rührstäben aufweist, durch dessen Betrieb eine verbesserte Stickstoffausgasung bewirkt und ein Verklumpen von Trägerkörpern und/oder Schlamm verhindert wird.

4. Verfahren nach einem der Ansprüche 1 bis 3, **dadurch gekennzeichnet, dass** jedenfalls ein Teil der Trägerkörper in dem oder den Reaktor(en) in einer oder mehreren käfigartigen Einfassung(en) angeordnet wird, die ein Entweichen der Trägerkörper verhindert (verhindern).

5. Anlage zur biologischen Abwasserreinigung mit Denitrifikation und nachgeschalteter Nitrifikation zur Umsetzung von in dem Abwasser enthaltenen Stickstoffverbindungen zu Stickstoffgas und mit einem Abbau organischer Fracht, dem sog. BSB-Abbau, unter Verwendung von heterotrophen Mikroorganismen, den sog. Denitrifikanten, für die Denitrifikation, von autotrophen Mikroorganismen, sog. Nitrifikanten, für die Nitrifikation, und aeroben heterotrophen Mikroorganismen für den BSB-Abbau, wobei die Denitrifikanten, die Nitrifikanten und die aeroben Heterotrophen für den BSB-Abbau in einem Reaktor (2, 20) angeordnet sind, wobei Trägerkörper (6, 7, 23) zur Besiedlung mit den Mikroorganismen vorgesehen sind, **dadurch gekennzeichnet, dass** die Trägerkörper (6, 7, 23) jeweils geeignet sind, dass sich auf den jeweiligen Trägerkörpern (6, 7, 23) zumindest vorwiegend nur eine Gruppe der Mikroorganismen ansiedelt, wobei die Trägerkörper (23) zur Besiedlung mit Denitrifikanten, die Trägerkörper (7) zur Besiedlung mit Nitrifikanten und die Trägerkörper (6) zur Besiedlung mit aeroben Heterotrophen für den BSB-Abbau jeweils in der Anlage räumlich voneinander getrennt sind, um ein Übersiedeln der Mikroorgansimen von mit einer ersten Art von Mikroorganismen (Denitrifikanten, Nitrifikanten, Heterotrophen für den BSB-Abbau) besiedelten Trägerkörpern (6, 7, 23) auf mit einer zweiten, von der ersten Art verschiedenen Art von Mikroorganismen (Nitrifikanten, Heterotrophen für den BSB-Abbau, Denitrifikanten) besiedelten Trägerkörpern (6, 7, 23) einzuschränken, vorzugsweise zu verhindern, wobei die Trägerkörper (6) zur Besiedlung mit aeroben Heterotrophen für den BSB-Abbau und die Trägerkörper (7) zur Besiedlung mit Nitrifikanten gemeinsam in einem Reaktor (2) angeordnet und dort dadurch vertikal stratifiziert sind, dass sie unterschiedliche Dichten aufweisen, wobei die Trägerkörper (7) zur Besiedlung mit Nitrifikanten eine höhere Dichte aufweisen und im Bereich des Bodens (4) des Reaktors (2) angeordnet sind, die Trägerkörper (6) zur Besiedlung mit aeroben Heterotrophen für den BSB-Abbau eine geringere Dichte aufweisen und im oberen Bereich des Reaktorvolumens (2) angeordnet sind, wobei die Trägerkörper (7) zur Besiedlung mit Nitrifikanten kugelförmige Ton- oder Keramikteilchen mit einer Dichte von 1,0 bis 1,2 kg/dm³ sind und die Trägerkörper (6) zur Besiedlung mit aeroben Heterotrophen kugelförmige Ton- oder Keramikteilchen mit einer Dichte von 0,8 bis 0,9 kg/dm³ sind, wobei Gaseinlässe am Boden des Reaktors (2) vorgesehen sind, in dem die Trägerkörper (7) zur Besiedlung mit Nitrifikanten und die Trägerkörper (6) zur Besiedlung mit aeroben Heterotrophen für den BSB-Abbau gemeinsam angeordnet sind, zum Eintragen eines sauerstoffhaltigen Gases in den Reaktor (2).

6. Anlage nach Anspruch 5, **dadurch gekennzeichnet, dass** jedenfalls in einem Reaktor (2) die Trägerkörper zur Besiedlung mit Mikroorganismen in einer oder mehreren käfigartigen durchlässigen Einfassung(en) (3) angeordnet sind, deren Öffnungsweiten so bemessen sind, dass sie von den Trägerkörpern nicht passiert werden können.

7. Anlage nach einem der Ansprüche 5 oder 6, **gekennzeichnet durch** Ablaufeinrichtungen der Reaktoren (2, 20) bestehend aus oberflächennah angeordneten Überlauf röhren (5), die Einströmöffnungen, insbesondere Einströmschlitze, für ab- oder überlaufendes Abwasser aufweisen, die derart klein dimensioniert sind, dass die in den Reaktoren befindlichen Trägerkörper (6, 7, 23) diese nicht passieren können.

## Claims

1. A method for the biological treatment of wastewater with denitrification and downstream nitrification for the elimination of nitrogen compounds contained in the wastewater to nitrogen gas and with a degradation of organic load, the so-called BOD degradation, using heterotrophic microorganisms, the so-called denitrifiers, for the denitrification, autotrophic microorganisms, so-called nitrificants, for the nitrification and aerobic heterotrophic microorganisms for the BOD degradation, whereas the wastewater is brought into contact with the denitrifiers, the nitrifiers and the aerobic heterotrophs for the BOD degradation in a defined sequence and spatial separation, **characterised in that** the nitrifiers and the aerobic heterotrophs are placed on different substrates, with surfaces adapted to the respective requirements of the nitrifiers and the aerobic heterotrophs and spatially separated from one another, the carrier bodies for the nitrifiers being spherical clay or ceramic particles with a density of 1.0 to 1.2 kg/dm³, the carrier bodies for the aerobic heterotrophs are spherical clay or ceramic particles having a density of 0.8 to 0.9 kg/dm³, and **in that** the microorganisms for nitrification and for BOD degradation are distributed stratified over the height in an upward-flow reactor into which oxygen or an oxygen-containing gas mixture is blown from the bottom, that the nitrifiers grown on the spherical clay or ceramic particles with a density of 1.0 to 1.2 kg/dm³ are arranged in a vertically lower layer of the reactor and the aerobic heterotrophs grown on the spherical clay or ceramic particles with a density of 0.8 to 0.9 kg/dm³ are arranged in a vertically higher layer of the reactor.

2. A method according to one of claim 1, **characterised in that** a separately upstream reactor for denitrification is provided.

3. A method according to claim 2, **characterised in that** the reactor for denitrification has a circular cross-section, is flowed through in an upward direction and has carrier bodies arranged therein which provide growth surfaces for denitrifiers and ensure a stable flow through the reactor, including good sludge-water separation, and **in that** the reactor for denitrification has an at least temporarily operable agitator with paddle-like stirring rods, the operation of which causes improved nitrogen outgassing and prevents clumping of carrier bodies and/or sludge,

4. A method according to any one of claims 1 to 3, **characterised in that** at least a part of the carrier bodies is arranged in the reactor(s) in one or more cage-like enclosures preventing escape of the carrier bodies.

5. A plant for biological wastewater treatment with denitrification and downstream nitrification for the conversion of nitrogen compounds contained in the wastewater to nitrogen gas and with a degradation of organic load, the so-called BOD degradation, using heterotrophic microorganisms, the so-called denitrifiers, for the denitrification, autotrophic microorganisms, the so-called nitrificants, for the nitrification and aerobic heterotrophic microorganisms for the BOD degradation. nitrificants, for nitrification, and aerobic heterotrophic microorganisms for BOD degradation, the denitrifiers, the nitrificants and the aerobic heterotrophs for BOD degradation being arranged in a reactor (2, 20), carrier bodies (6, 7, 23) being provided for colonisation with the microorganisms, **characterised in that** the carrier bodies (6, 7, 23) are each suitable for at least predominantly only one group of the microorganisms to settle on the respective carrier bodies (6, 7, 23), the carrier bodies (23) being intended for settlement with denitrifiers, the carrier bodies (7) for colonisation with nitrifiers and the carrier bodies (6) for colonisation with aerobic heterotrophs for BOD degradation are in each case spatially separated from one another in the installation in order to prevent the microorganisms from colonising with a first type of microorganism (denitrifiers, nitrifiers, heterotrophs for BOD degradation), heterotrophs for BOD degradation) to carrier bodies (6, 7, 23) colonised with a second type of microorganisms (nitrifiers, heterotrophs for BOD degradation, denitrifiers) different from the first type, wherein the carrier bodies (6) for colonisation with aerobic heterotrophs for BOD degradation and the carrier bodies (7) for colonisation with nitrifiers are arranged together in a reactor (2) and are vertically stratified there **in that** they have different densities, wherein the carrier bodies (7) for colonisation with nitrifiers have a higher density and are arranged in the region of the bottom (4) of the reactor (2), the carrier bodies (6) for colonisation with aerobic heterotrophs for BOD degradation have a lower density and are arranged in the upper region of the reactor volume (2), wherein the support bodies (7) for colonisation with nitrifiers are spherical clay or ceramic particles with a density of 1.0 to 1.2 kg/dm³ and the support bodies (6) for colonisation with aerobic heterotrophs are spherical clay or ceramic particles with a density of 0.8 to 0.9 kg/dm³, wherein gas inlets are provided at the bottom of the reactor (2), in which the carrier bodies (7) for colonisation with nitrifiers and the carrier bodies (6) for colonisation with aerobic heterotrophs for BOD degradation are arranged together, for introducing an oxygen-containing gas into the reactor (2).

6. A plant according to claim 5, **characterised in that**, at least in one reactor (2), the carrier bodies for colonisation with microorganisms are arranged in one or more cage-like permeable enclosure(s) (3), the opening widths of which are dimensioned such that they cannot be passed by the carrier bodies.

7. A plant according to one of claims 5 or 6, **characterised by** discharge devices of the reactors (2, 20) consisting of overflow pipes (5) arranged close to the surface, which have inflow openings, in particular inflow slots, for wastewater flowing off or over, which are dimensioned so small that the carrier bodies (6, 7, 23) located in the reactors cannot pass through them,

## Revendications

1. Procédé pour l'épuration biologique des eaux usées avec dénitrification et nitrification en aval pour l'élimination des composés azotés contenus dans les eaux usées en azote gazeux et avec une dégradation de la charge organique, dite dégradation de la DBO, en utilisant des micro-organismes hétérotrophes, dits dénitrificateurs, pour la dénitrification, des microorganismes autotrophes, dits nitrificateurs, pour la nitrification et des microorganismes hétérotrophes aérobies pour la dégradation de la DBO, dans lequel les eaux usées sont traitées avec les dénitrificateurs, les nitrificateurs et les microorganismes aérobies pour la dégradation de la DBO. nitrifiants, pour la nitrification, et de micro-organismes hétérotrophes aérobies pour la dégradation de la DBO, les eaux usées étant mises en contact avec les dénitrificateurs, les nitrifiants et les hétérotrophes aérobies pour la dégradation de la DBO selon une séquence définie et une séparation spatiale, **caractérisé en ce que** les nitrifiants et les hétérotrophes aérobies sont placés sur différentes surfaces des eaux usées, avec des surfaces adaptées aux exigences respectives des nitrificateurs et des hétérotrophes aérobies et séparées les unes des autres dans l'espace, les corps de support des nitrificateurs étant des particules sphériques d'argile ou de céramique d'une densité de 1,0 à 1,2 kg/dm³, les corps de support des hétérotrophes aérobies sont des particules sphériques d'argile ou de céramique ayant une densité de 0,8 à 0,9 kg/dm³, et **en ce que** les micro-organismes pour la nitrification et pour la dégradation de la DBO sont répartis de manière stratifiée sur la hauteur dans un réacteur à écoulement ascendant dans lequel de l'oxygène ou un mélange gazeux contenant de l'oxygène est injecté par le bas, **en ce que** les nitrifiants cultivés sur les particules sphériques d'argile ou de - céramique ayant une densité de 1,0 à 1,2 kg/dm³ sont disposés dans une couche inférieure verticale du réacteur et les hétérotrophes aérobies cultivés sur les particules sphériques d'argile ou de céramique ayant une densité de 0,8 à 0,9 kg/dm³ sont disposés dans une couche supérieure verticale du réacteur.

2. Procédé selon l'une des revendications 1, **caractérisé en ce qu'**un réacteur en amont séparé pour la dénitrification est fourni.

3. Procédé selon la revendication 2, **caractérisé en ce que** le réacteur de dénitrification présente une section transversale circulaire, est traversé par un écoulement vers le haut et comporte des corps de support disposés à l'intérieur, qui fournissent des surfaces de croissance pour les dénitrificateurs et assurent un écoulement stable à travers le réacteur, y compris une bonne séparation boues-eau, et **en ce que** le réacteur de dénitrification présente un agitateur pouvant fonctionner au moins temporairement avec des barres d'agitation en forme de pales, dont le fonctionnement provoque un dégazage amélioré de l'azote et empêche l'agglutination des corps de support et/ou des boues,

4. Procédé selon l'une quelconque des revendications 1 à 3, **caractérisé en ce qu'**au moins une partie des corps de support dans le(s) réacteur(s) est disposée dans une ou plusieurs enceintes en forme de cage empêchant la fuite des corps de support.

5. Installation pour le traitement biologique des eaux usées avec dénitrification et nitrification en aval pour la conversion des composés azotés contenus dans les eaux usées en azote gazeux et avec une décomposition de la matière organique, dite décomposition de la DBO, en utilisant des micro-organismes hétérotrophes, dits dénitrificateurs, pour la dénitrification, des micro-organismes autotrophes, dits nitrificateurs, pour la nitrification et des micro-organismes hétérotrophes aérobies pour la décomposition de la DBO, les dénitrificateurs, les nitrificateurs et les micro-organismes hétérotrophes aérobies étant utilisés pour la décomposition de la DBO. nitrifiants, pour la nitrification, et des micro-organismes hétérotrophes aérobies pour la dégradation de la DBO, dans lequel les dénitrificateurs, les nitrifiants et les hétérotrophes aérobies pour la dégradation de la DBO sont disposés dans un réacteur (2, 20), dans lequel des corps porteurs (6, 7, 23) sont prévus pour la colonisation par les micro-organismes, **caractérisé en ce que** les organes de support (6, 7, 23) sont chacun adaptés pour le dépôt au moins majoritairement d'un seul groupe de micro-organismes sur les organes de support respectifs (6, 7, 23), les organes de support (23) étant destinés au dépôt avec des dénitrificateurs, les corps de support (7) pour la colonisation par des nitrifiants et les corps de support (6) pour la colonisation par des hétérotrophes aérobies pour la dégradation de la DBO sont dans chaque cas séparés spatialement les uns des autres dans l'installation afin d'empêcher les micro-organismes de coloniser avec un premier type de micro-organisme (dénitrifiants, nitrifiants, hétérotrophes pour la dégradation de la DBO), hétérotrophes pour la dégradation de la DBO) à des corps porteurs (6, 7, 23) colonisés par un second type de micro-organismes (nitrifiants, hétérotrophes pour la dégradation de la DBO, dénitrifiants) différent du premier type, dans lequel les corps porteurs (6) pour la colonisation avec des hétérotrophes aérobies pour la dégradation de la DBO et les corps porteurs (7) pour la colonisation avec des nitrifiants sont disposés ensemble dans un réacteur (2) et y sont stratifiés verticalement en ayant des densités différentes, dans lequel les corps de support (7) pour la colonisation avec des nitrifiants ont une densité plus élevée et sont disposés dans la zone du fond (4) du réacteur (2), les corps de support (6) pour la colonisation avec des hétérotrophes aérobies pour la dégradation de la DBO ont une densité plus faible et sont disposés dans la zone supérieure du volume du réacteur (2), dans laquelle les corps de support (7) pour la colonisation avec des nitrificateurs sont des particules sphériques d'argile ou de céramique ayant une densité de 1,0 à 1,2 kg/dm³ et les corps de support (6) pour la colonisation avec des hétérotrophes aérobies sont des particules sphériques d'argile ou de céramique ayant une densité de 0,8 à 0,9 kg/dm³, dans lequel des entrées de gaz sont prévues au fond du réacteur (2), dans lequel les corps de support (7) pour la colonisation avec des nitrifiants et les corps de support (6) pour la colonisation avec des hétérotrophes aérobies pour la dégradation de la DBO sont disposés ensemble, pour introduire un gaz contenant de l'oxygène dans le réacteur (2).

6. Installation selon la revendication 5, **caractérisée en ce que**, au moins dans un réacteur (2), les corps de support pour la colonisation par des micro-organismes sont disposés dans une ou plusieurs enceintes perméables en forme de cage (3), dont les ouvertures sont dimensionnées de telle sorte qu'elles ne peuvent pas être traversées par les corps de support.

7. Installation selon l'une des revendications 5 ou 6, **caractérisée par** des dispositifs de décharge des réacteurs (2, 20) constitués de tubes de débordement (5) disposés près de la surface, qui présentent des ouvertures d'entrée, en particulier des fentes d'entrée, pour les effluents s'écoulant ou débordant, qui sont dimensionnées si petites que les corps porteurs (6, 7, 23) se trouvant dans les réacteurs ne peuvent pas les traverser.
